# EUROPEAN PATENT APPLICATION

(11) **EP 1 000 717 A2**
(43) Date of publication of application: **17.05.2000**
(21) Application number: 99308940.8
(22) Date of filing: 10.11.1999
(51) Int. Cl.: B27G 5/02, G01B 3/10, G01B 21/02, B23D 59/00, B23D 45/04, B23D 47/04

(54) **Mitre saw workstation**

(30) Priority: 12.11.1998 US 108046
(71) Applicant: Black & Decker Inc., Newark Delaware 19711 (US)
(72) Inventor: O'Banion, Michael L., Westminster, Maryland 21157 (US)
(74) Representative: Dlugosz, Anthony Charles

(57) **Abstract**

A mitre saw workstation (100) apparatus includes a mitre saw (10) comprising a base (11), a rotatable table (12) rotatably disposed on the base for rotation about a first axis, a pivot block (14) rotatably attached to the table for rotation about a second axis, a pivot arm (15) rotatably attached to the pivot block for rotation about a third axis, a mitre saw unit (22) supported by the pivot arm, the mitre saw unit comprising a blade (17) and a motor (19) for driving the blade, a first servo (212) rotationally driving the table, a second servo (211) rotationally driving the pivot block, a third servo (213) rotationally driving the pivot arm (15), and a controller connected to the first, second and third servos. Further disclosed is an improved tape measure comprising a housing, a ruler tape disposed in the housing for measuring a length, a tape output circuit disposed in the housing for determining the measured length, a transmitter connected to the tape output circuit for transmitting a signal corresponding to the measured length.

## Description

This invention relates generally to tools and, more particularly, to a digitally-controllable mitre saw workstation.

Contractors working on buildings, homes, etc., are regularly required to make repeated cuts of wood boards, moldings, etc. For example, a worker cutting the base molding for a four wall room would have to take at least four length measurements, and possible angle measurements, then measure a molding, place the molding on a mitre saw, set the mitre saw to the appropriate mitre and/or bevel angles, then proceed to cut. The worker may be required to measure the cut moldings and/or the wall lengths, etc. several times during this process to ensure that the moldings have been cut properly. However, every time a measurement is taken, the possibilities of error increase. Accordingly, it is desirable to provide an apparatus that would diminish such error possibilities.

In accordance with the present invention, an improved mitre saw workstation is employed. The mitre saw workstation apparatus includes a mitre saw comprising a base, a rotatable table rotatably disposed on the base for rotation about a first axis, a pivot block rotatably attached to the table for rotation about a second axis, a pivot arm rotatably attached to the pivot block for rotation about a third axis, a mitre saw unit supported by the pivot arm, the mitre saw unit comprising a blade and a motor for driving the blade, a first servo rotationally driving the table, a second servo rotationally driving the pivot block, a third servo rotationally driving the pivot arm, and a controller connected to the first, second and third servos.

Further disclosed is an improved tape measure comprising a housing, a ruler tape disposed in the housing for measuring a length, a tape output circuit disposed in the housing for determining the measured length, a transmitter connected to the tape output circuit for transmitting a signal corresponding to the measured length.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a block diagram of the electronic components of the present invention;
FIG. 2 is a side elevational view of a tape measure according to the present invention;
FIGS. 3A and 3B are partial cross-sectional side views of tape measures according to the present invention;
FIG. 4 is a side elevational view of a mitre saw according to the present invention; and
FIG. 5 is a front elevational view of a mitre saw workstation according to the present invention.

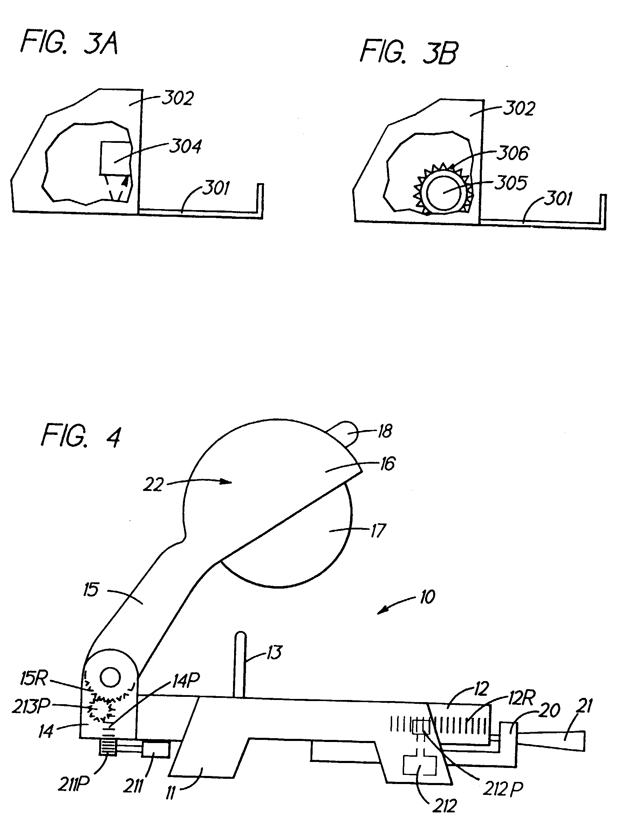

The invention is now described with reference to the accompanying figures, wherein like numerals designate like parts. Referring to FIGS. 4-5, a mitre saw workstation 100 comprises a mitre saw 10 and a mitre saw controller 200. Mitre saw workstation 100 may also include a stand 110 for supporting mitre saw 10 and/or mitre saw controller 200.

Mitre saw workstation 100 may also include an extension table 120 for supporting a workpiece W which extends beyond the width of stand 110. Table 120 may be supported by a leg 122. Table 120 may have rollers 121 disposed thereon to facilitate movement of workpiece W towards mitre saw 10. Persons skilled in the art will recognize that it is desirable that the rollers 121 are set at a height equal to the height of the mitre saw table 12. Accordingly, it is preferable that the rollers 121 be adjustable in height.

Mitre saw 10, like typical prior art mitre saws, has a base 11, a rotatable table 12 rotatably disposed within base 11, a fence 13 disposed above and on base 11 to support a workpiece placed on base 11, a pivot block 14 pivotally attached to the table 12, a pivot arm 15 pivotally connected to the pivot block 14 for supporting a mitre saw unit 22. Mitre saw unit 22 may include a blade 17, a motor 19 driving the blade, an upper guard 16 covering the upper portion of blade 17 and a handle 18 for moving the mitre saw unit 22. Accordingly, a user can pivot arm 15 and mitre saw unit 22 downwardly to cut a workpiece placed on table 12.

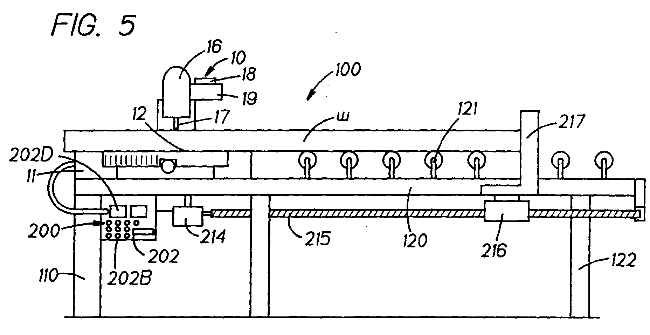

Further, because of the connection between pivot block 14 and table 12, a user may be able to change the bevel angle of blade 17 relative to table 12. In other words, the user can pivot block 14 (and thus pivot arm 15 and mitre saw unit 22) to obtain bevel cutting angles other than the substantially perpendicular bevel angle shown in FIG. 5. Preferably the user will be able to pivot block 14 both rightwardly and leftwardly from the substantially perpendicular position shown in FIG. 5.

Because of the connection between table 12 and base 11, the user may be able to rotate table 12 (and thus mitre saw unit 22) to change the mitre angle of the table relative to base 11 and fence 13. Accordingly, a user may be able to make mitre cuts. The user may then lock the table position by turning handle 21 until it contacts table 12. Persons skilled in the art will recognize that handle 21 is supported by bracket arm 20 which is non-rotatably supported by and/or attached to base 11.

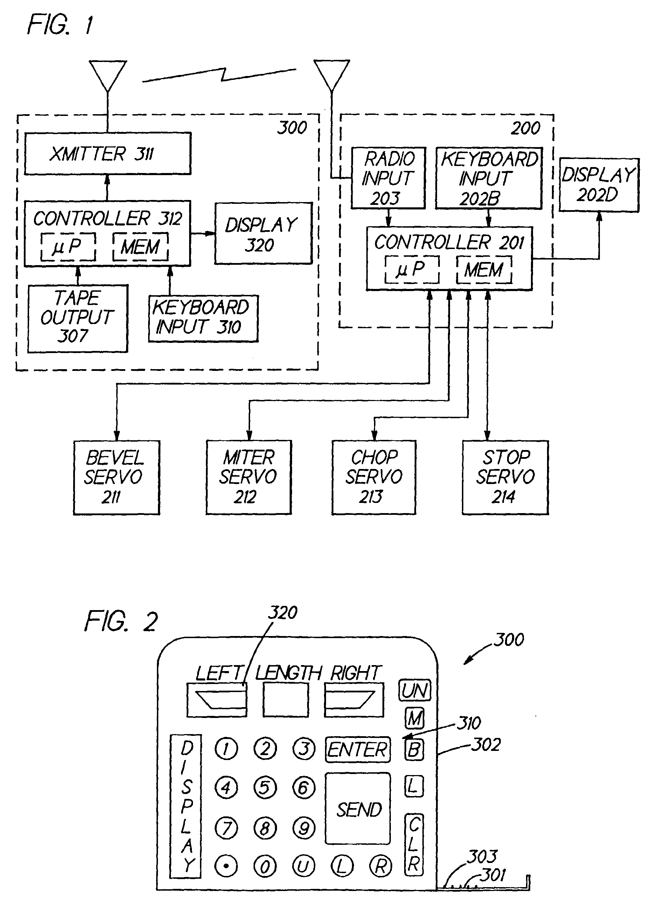

Unlike typical prior art mitre saws, mitre saw 10 can be controlled by a mitre saw controller 200. Referring to FIG. 1 and 5, mitre saw controller 200 may have a controller circuit 201 for controlling different electric motors, or servos, attached to the mitre saw 10 for varying the bevel and/or mitre angles, as well as causing the chopping action. Preferably, controller circuit 201 includes a microprocessor that process the different inputs, as discussed below, and controls the operation of the different servos. As shown in FIG. 1, controller circuit 201 controls the bevel servo 211, which changes the bevel angle, the mitre servo, which changes the mitre angle, and the chop servo 212, which causes the chopping action.

Referring to FIG. 4, bevel servo 211 is preferably disposed underneath table 12. Bevel servo 211 may drive a pinion 211P, which meshes with a rack 14R disposed on pivot block 14. Persons skilled in the art will recognize that bevel servo 211 may be placed inside table 12 so that it engages a rack disposed on the inside of pivot block 14. Bevel servo 211 preferably includes means to provide a measurement of the servo movement, e.g., how many rotations (or fractions thereof) the pinion 211P has made. Such means are well known in the art and may include a light passing through a disc, a bump on a drive shaft, etc. The bevel servo 211 may then feed the movement measurement back to the controller circuit 201 so that the controller circuit 201 can determine whether to stop bevel servo 211.

Similarly, mitre servo 212 is preferably disposed on base 11. Mitre servo 212 may drive a pinion 212P, which meshes with a rack 12R disposed on table 12. Persons skilled in the art will recognize that bevel servo 211 may be placed underneath table 12 so that it engages a rack disposed on the inside of table 12. Mitre servo 212 preferably includes means to provide a measurement of the servo movement, e.g., how many rotations (or fractions thereof) the pinion 212P has made. The mitre servo 212 may then feed the movement measurement back to the controller circuit 201 so that the controller circuit 201 can determine whether to stop mitre servo 212.

Further, chop servo 213 (not shown in FIG. 4) is preferably disposed in pivot block 14 and/or underneath pivot arm 15. Chop servo 213 may drive a pinion 213P, which meshes with a rack 15R disposed on pivot arm 15. Chop servo 213 preferably includes means to provide a measurement of the servo movement, e.g., how many rotations (or fractions thereof) the pinion 213P has made. The chop servo 213 may then feed the movement measurement back to the controller circuit 201 so that the controller circuit 201 can determine whether to stop chop servo 213.

Referring to FIGS. 1 and 5, controller 201 may also control a stop servo 214, which may be mounted underneath stand 110 and drive a screw 215. A stop 217 is movably connected to screw 215 via member 216. Accordingly, when stop servo 214 rotates screw 215, stop 217 moves along screw 215. Stop servo 214 preferably includes means to provide a measurement of the servo movement, e.g., how many rotations (or fractions thereof) the pinion 213P has made. The stop servo 214 may then feed the movement measurement back to the controller circuit 201 so that the controller circuit 201 can determine whether to stop servo 214. With such arrangement, controller 201 can then control the length of a workpiece to be cut with mitre saw 10.

Persons skilled in the art will recognize that bevel, mitre, chop and/or stop servos preferably have bi-directional action, so that their respective pinions can rotate both clockwise and counterclockwise.

Preferably, a person can program and/or control the cutting operation via a keyboard with buttons 202B. Preferably the keyboard includes buttons 202B arranged in a similar manner to the keyboard 310 shown in FIG 2. The buttons 202B may include buttons to enter numerals (0-9) or periods, switch between units (feet-to-meter, inches-to-centimeters), clear previous entries, program mitre and/or bevel angles or lengths, input values for left and/or right ends, etc.

Preferably buttons 202B are disposed on console 202, which may also support a display 202D to show the different inputs and outputs. As shown in FIG. 1, display 202D is connected to and/or controlled by controller 201. Display 202D may be arranged in a similar manner to the display 320 shown in FIG 2. Accordingly, display 202D may graphically display the resulting cut on the left and/or right ends of a workpiece, numerically display the different angles to be performed, numerically display the length of the workpiece, etc.

Another aspect of the present invention is the use of an improved tape measure to send the different information to the controller 200. Referring to FIGS. 1 and 2, tape measure 300 has a ruler tape 301 which is stored within housing 302. Preferably tape 301 is mounted on a spring-loaded mechanism (not shown) so that it can be retracted, as is well known in the art.

Furthermore tape measure 300 may have a keyboard 310 with buttons. The keyboard 310 may include buttons to enter numerals (0-9) or periods, switch between units (feet-to-meter, inches-to-centimeters), clear previous entries, program mitre and/or bevel angles or lengths, input values for left and/or right ends, etc. The input of keyboard 310 is received by controller 312 which may analyze and/or store the input. Controller 312 may have a microprocessor and/or memory means integrated therein.

Preferably, the keyboard 310 has a "send" button so that, when the operator has finished programming the desired cuts, the operator presses the "send" button. Upon receipt of the resulting send signal, controller 312 dumps the data on transmitter 311 which may encode and/or transmit a signal representative of the keyboard input. Persons skilled in the art will recognize that the controller 312 and transmitter 311 may be combined in different configurations, including integrating both circuits, and still obtain the same result, i.e., converting and transmitting the keyboard input.

Persons skilled in the art will recognize that different schemes for transmission may be used, including microwaves, infrared light, light via fiber optics, etc. Nevertheless, it is preferable to use radio signals to transmit the information.

Such signals are received by radio input circuitry 203, which may also demodulate and send the signal to controller circuit 201 for interpretation and/or execution as discussed above. Such signals may be stored in memory means, which may be integrated within controller circuit 201.

Display 320 may also be disposed on housing 302 to show the different inputs and outputs. As shown in FIG. 1, display 320 is connected to and/or controlled by controller 312. Display 320 may graphically display the resulting cut on the left and/or right ends of a workpiece, numerically display the different angles to be performed, numerically display the length of the workpiece, etc.

Referring to FIGS. 1 and 3, the tape measure 300 may also have a tape output circuit 307 to automatically determine the measured length. Accordingly, the operator need only measure a length, which is automatically provided to controller 312.

FIG. 3A illustrates a first embodiment of tape output circuit 307. Primarily circuit 307 may include a bar code reader 304 which reads bar codes or other insignia (303 on FIG. 2) on tape 301. Bar code reader 304 may translate the bar code 303 to the appropriate length and send that to controller 312. Alternatively, bar code reader 304 may just send a signal representative of the bar code 303, which the controller 312 then translates.

FIG. 3B illustrates a second embodiment of tape output circuit 307. In this embodiment, circuit 307 includes a counter (not shown) which is connected to pinion 305. The teeth 306 of pinion 305 engage holes (not shown) in tape 301. Accordingly, as the tape 301 is deployed, the pinion 305 rotates. The counter then counts how many times pinion 305 rotates, providing a signal corresponding to the deployed length.

Persons skilled in the art will recognize that other alternatives to the first and second embodiments of circuit 307 exist. For example, tape 301 may have holes at predetermined distances. Accordingly, light provided one side of tape 301 may shine though these holes onto an electric eye at the other side of tape 301. A counter connected to the electric eye will count how many times the eye was hit with light, providing a signal corresponding to the deployed length. Nevertheless, all these alternatives are considered equivalents to circuit 307.

With such construction, an operator can just measure a certain length, which can then be transmitted to the controller 200. Controller 200 may then activate stop servo 214 to the appropriate length and chop servo 213 to cut the workpiece. Operator can also supplement the length information sent to controller 200 with the keyboard 310.

Further, the means disclosed herein may have other modes of operation. For example, instead of transmitting the information to controller 200, the tape measure 300 may just store the different measurements in memory. When all the measurements have been taken, the tape measure 300 is provided to the operator, who may depress a "DISPLAY" button for displaying the memory contents on display 320. The operator can then manually set the mitre saw 10 and/or workpiece W according to the displayed information and conduct the cutting operation.

Alternatively, after the tape measure 300 transmits the memory contents to controller 200, controller 200 may just show the transmitted information on display 202D without activating the servos. As before, the operator can then manually set the mitre saw 10 and/or workpiece W according to the displayed information and conduct the cutting operation.

Persons skilled in the art may recognize other alternatives to the means disclosed herein, such as using a sliding mitre saw or chop saws instead of mitre saw 10. However, all these additions and/or alterations are considered to be equivalents of the present invention.

## Claims

1. A sawing workstation comprising:
a base;
a rotatable table rotatably disposed on the base for rotation about a first axis;
a pivot block rotatably attached to the table for rotation about a second axis;
a pivot arm rotatably attached to the pivot block for rotation about a third axis;
a saw unit supported by the pivot arm, the saw unit comprising a blade and a
motor for driving the blade;
a first servo rotationally driving the table;
a second servo rotationally driving the pivot block;
a third servo rotationally driving the pivot arm;
and a controller connected to the first, second and third servos.

2. The workstation of Claim 1, further comprising a stand supporting the base.

3. The workstation of Claim 2, further comprising an extension table connected to the stand.

4. The workstation of Claim 1, wherein the controller comprises a microprocessor.

5. The workstation of Claim 1, further comprising a keyboard input for providing information to the controller.

6. The workstation of Claim 1, wherein the controller comprises a signal receiver circuit for receiving information.

7. The workstation of Claim 6, wherein the signal receiver circuit receives radio signals.

8. The workstation of Claim 7, wherein the radio signals contain information to be provided to the controller.

9. The workstation of Claim 7, wherein the radio signals are sent by transmitter circuit.

10. The workstation of Claim 7, wherein the transmitter circuit is connected to a keyboard input.

11. The workstation of Claim 7, wherein the transmitter circuit is connected to a tape measure.

12. The workstation of Claim 6, wherein the signal receiver circuit receives information from a transmitter circuit.

13. The workstation of Claim 12, wherein the transmitter circuit is connected to a keyboard input.

14. The workstation of Claim 12, wherein the transmitter circuit is connected to a tape measure.

15. A tape measure comprising:
a housing;
a ruler tape disposed in the housing for measuring a length;
a tape output circuit disposed in the housing for determining the measured length; and
a transmitter connected to the tape output circuit for transmitting a signal corresponding to the measured length.

16. The tape measure of Claim 15, wherein the tape output circuit comprises an insignia reader for reading insignia on the tape.

17. The tape measure of Claim 15, wherein the tape output circuit comprises a counter circuit.

18. The tape measure of Claim 15, further comprising a display disposed on the housing.

19. The tape measure of Claim 15, further comprising a keyboard input disposed on the housing.
